# EUROPÄISCHE PATENTSCHRIFT

(11) **EP 2 677 791 B1**
(45) Veröffentlichungstag und Bekanntmachung des Hinweises auf die Patenterteilung: **21.12.2016**
(21) Anmeldenummer: 13169398.8
(22) Anmeldetag: 27.05.2013
(51) Int. Cl.: H04W 12/06, H04L 29/06

(54) **VERFAHREN UND VORRICHTUNG ZUM ÜBERMITTELN EINER PRÜFANFRAGE AN EIN IDENTIFIZIERUNGSMODUL**
METHOD AND DEVICE FOR TRANSFERRING A TEST REQUEST TO AN IDENTIFICATION MODULE
PROCÉDÉ ET DISPOSITIF DE DÉTERMINATION D'UNE DEMANDE DE CONTRÔLE À UN MODULE D'IDENTIFICATION

(30) Priorität: 19.06.2012 DE 102012210343
(43) Veröffentlichungstag der Anmeldung: 25.12.2013
(73) Patentinhaber: Vodafone Holding GmbH, 40213 Düsseldorf (DE)
(72) Erfinder: Nozulak, Thorsten, 45711 Datteln (DE); Seifert, Ulrich, 40468 Düsseldorf (DE)
(74) Vertreter: Jostarndt Patentanwalts-AG

(56) Entgegenhaltungen:
- EP-A1- 1 919 157
- DE-A1-102006 060 967
- US-A1- 2004 131 185
- US-A1- 2012 144 198

## Beschreibung

Die Erfindung befasst sich mit der Nutzung eines Identifizierungsmoduls in einem Kommunikationsendgerät. Insbesondere betrifft die Erfindung ein Verfahren zum Übermitteln einer Prüfanfrage an ein in einem Kommunikationsendgerät enthaltenes Identifizierungsmodul und eine zur Durchführung des Verfahrens geeignete Vorrichtung.

Kommunikationsendgeräte, die für den Zugriff auf ein Mobilfunknetz vorgesehen sind, enthalten üblicherweise ein Identifizierungsmodul, welches für den Nutzer des Endgeräts personalisiert ist und unter anderem Daten und/oder Prozesse zur Teilnehmeridentifizierung und/oder -authentisierung bereitstellt. Beispiele für derartige Identifizierungsmodule sind SIM (Subscriber Identity Module)- und USIM (Universal Subscriber Identity Modul)-Karten, wie sie in GSM (Global System for Mobile Communications)-, UMTS (Universal Mobile Telecommunications System)- und LTE (Long Term Evolution)-Netzen verwendet werden. Die Teilnehmeridentifizierung und/oder -authentisierung wird in der Regel beim Einbuchen in ein Mobilfunknetz vorgenommen, um die Zugriffsberechtigung auf Mobilfunkdienste zu ermitteln und beinhaltet die Ausführung von kryptografischen Operation innerhalb des Identifizierungsmoduls, die unter Verwendung von kryptografischen Schlüsseln vorgenommen werden, welche in dem Identifizierungsmodul gespeichert sind.

Grundsätzlich können in einem Identifizierungsmodul, welches in ein Kommunikationsendgerät eingesetzt ist, auch kryptographische Operationen zu anderen Zwecken als zur Teilnehmeridentifizierung und -authentisierung ausgeführt werden.

Insbesondere können Prüfanfragen von Applikationen, die in dem Kommunikationsendgerät ausgeführt werden, von dem Identifizierungsmodul des Kommunikationsendgeräts beantwortet werden. Hierbei kann es sich beispielsweise um Prüfanfragen zur Nutzerauthentifizierung seitens der Applikation handeln. So kann anhand einer entsprechenden Prüfanfrage, die mithilfe von dem Identifizierungsmodul zugeordneten geheimen Schlüsseln beantwortet wird, festgestellt werden, ob das Identifizierungsmodul eines berechtigten Nutzers der Applikation in das Kommunikationsendgerät eingesetzt ist.

Zur Übermittlung von Prüfanfragen von einer Applikation an ein Identifizierungsmodul und zur Übermittlung der Prüfantwort des Identifizierungsmoduls an die Applikation ist eine Kommunikation zwischen der Applikation und dem Identifizierungsmodul erforderlich. Bei einigen Kommunikationsendgeräten kann hierzu ein gerätinterner Datenaustausch zwischen der Applikation und dem Identifizierungsmodul über eine entsprechende geräteinterne Schnittstelle vorgenommen werden, die einen Zugriff auf das Identifizierungsmodul ermöglicht. Es gibt jedoch gleichfalls Kommunikationsendgeräte, bei denen eine solche Schnittstelle nicht vorhanden bzw. aufgrund von in den Geräten implementierten Sicherheitsrichtlinien gesperrt ist.

Die US 2004/0131185 A1 offenbart ein Authentifizierungszentrum, welches ein drahtloses Gerät durch einen Vergleich einer signierten Antwort von dem drahtlosen Gerät mit einer vorhergesagten, signierten Antwort authentifiziert. Die signierte Antwort kann aus einer Zufallszahl, Identifikationsnummer des drahtlosen Geräts und einem Benutzerschlüssel erzeugt werden. Wenn das drahtlose Gerät authentifiziert ist, kann eine OTA Anwendung zum drahtlosen Gerät in Protokolldateneinheiten (PDUs) gesendet werden. Vor dem Senden der PDUs kann eine Zufallszahl zu einem der PDUs hinzugefügt werden. Beim Empfang der PDUs kann das drahtlose Gerät die Zufallszahl extrahieren einen Chiffrierschlüssel unter Verwendung der Identifikationsnummer und des Benutzerschlüssels berechnen. Die OTA-Anwendung kann akzeptiert werden, wenn der Chiffrierschlüssel mit einem vorher generierten Chiffrierschlüssel übereinstimmt.

Es ist eine Aufgabe der vorliegenden Erfindung, die Beantwortung von Prüfanfragen von Applikationen durch ein Identifizierungsmodul auch in solchen Kommunikationsendgeräten zu ermöglichen.

Die Aufgabe wird gelöst durch ein Verfahren nach Anspruch 1, durch eine Vorrichtung nach Anspruch 12, eine Applikation nach Anspruch 13, ein Kommunikationsendgerät nach Anspruch 14 und die Systeme nach Anspruch 15 oder 16. Ausgestaltungen des Verfahrens und der Vorrichtung sowie der Applikation sind in den abhängigen Ansprüchen angegeben.

Gemäß einem ersten Aspekt der Erfindung wird ein Verfahren zum Übermitteln einer Prüfanfrage zur Freigabe eines Zugriffs auf eine Applikation eines Kommunikationsendgerätes an ein in einem Kommunikationsendgerät enthaltenes Identifizierungsmodul vorgeschlagen. Das Verfahren weist die folgenden Schritte auf: Erzeugen eines Antwortschlüssels, Empfangen einer von der Applikation des Kommunikationsendgeräts gesendeten Anforderung zur Übermittlung der Prüfanfrage an das Identifizierungsmodul in einer räumlich getrennt von dem Kommunikationsendgerät angeordneten Übermittlungseinrichtung, Übertragen der Prüfanfrage von der Übermittlungseinrichtung an das Identifizierungsmodul des Kommunikationsendgeräts aufgrund der Anforderung, wobei die Prüfanfrage den Antwortschlüssel umfasst, Ermitteln einer Prüfantwort mittels des Identifizierungsmoduls basierend auf Prüfanfrage, wobei Prüfantwort den Antwortschlüssel enthält, Empfangen der Prüfantwort auf die Prüfanfrage in der Übermittlungseinrichtung, Prüfen der Prüfantwort mittels des Antwortschlüssels und Übermitteln einer Benachrichtigung über die erhaltene Prüfantwort von der Übermittlungseinrichtung an die Applikation des Kommunikationsendgeräte.

Gemäß einem weiteren Aspekt schlägt die Erfindung eine Vorrichtung zur Verbindung mit einem räumlich von der Vorrichtung getrennten Kommunikationsendgerät vor, das ein Identifizierungsmodul enthält, welches zur Beantwortung einer Prüfanfrage ausgestaltet ist. Die Vorrichtung ist dazu ausgestaltet, eine von einer Applikation des Kommunikationsendgeräts gesendete Anforderung zur Übermittlung der Prüfanfrage an das Identifizierungsmodul des Kommunikationsendgeräts zu empfangen, die Prüfanfrage zu erzeugen, wobei die Prüfanfrage einen Antwortschlüssel umfasst, die Prüfanfrage aufgrund der Anforderung an das Identifizierungsmodul zu übermitteln, eine in dem Identifizierungsmodul ermittelte Prüfantwort auf die Prüfanfrage zu empfangen, wobei die Prüfantwort den Antwortschlüssel umfasst und eine Benachrichtigung über die erfolgreiche Prüfung der erhaltenen Prüfantwort an die Applikation des Kommunikationsendgeräts zu über-mitteln.

Die Erfindung beinhaltet die Idee, dass die Prüfanfrage aufgrund einer entsprechenden Anforderung der Applikation von einer Übermittlungseinrichtung an das Identifizierungsmodul des Kommunikationsendgeräts übermittelt wird und die Applikation von der Übermittlungseinrichtung über die Prüfantwort informiert wird.

Ferner schlägt die Erfindung gemäß einem weiteren Aspekt eine Applikation zur Verwendung in einem Kommunikationsendgerät vor, das ein Identifizierungsmodul enthält. Die Applikation ist dazu ausgestaltet, eine Prüfanfrage zur Freigabe eines Zugriffs auf die Applikation zu erzeugen, die einen Antwortschlüssel umfasst und mittels des Kommunikationsendgerätes, die Prüfanfrage an das Identifizierungsmodul an eine räumlich von dem Kommunikationsendgerät getrennte Übermittlungseinrichtung zu übermitteln, und die Applikation dazu ausgestaltet ist, eine Prüfantwort mittels des Kommunikationsendgerätes zu empfangen, wobei die Prüfantwort den Antwortschlüssel umfasst, die Applikation weiter dazu ausgestaltet ist, die Prüfantwort mittels des Antwortschlüssels zu prüfen.

Die Übermittlungseinrichtung ist eine externe Einrichtung, die räumlich von dem Kommunikationsendgerät getrennt angeordnet ist. Hierdurch ist es auch dann möglich, die Prüfanfrage an das Identifizierungsmodul zu übermitteln und die Applikation über die Prüfantwort zu informieren, wenn eine geräteinterne Übergabe der Prüfanfrage und der Prüfantwort nicht möglich ist.

Die Verbindung zwischen dem Kommunikationsendgerät bzw. der Applikation und dem Identifizierungsmodul mit der Übermittlungseinrichtung kann über ein Kommunikationsnetz hergestellt werden. Insbesondere kann die Übermittlungseinrichtung ein Bestandteil eines Mobilfunknetzes sein, mit dem das Kommunikationsendgerät verbunden werden kann. Die Kommunikation zwischen dem Kommunikationsendgerät und der Übermittlungseinrichtung kann in diesem Fall drahtlos über das Mobilfunknetz erfolgen.

In einer Ausgestaltung des Verfahrens und der Vorrichtung umfasst die Prüfanfrage einen verschlüsselten Antwortschlüssel, der nur mit einem in dem Identifizierungsmodul gespeicherten geheimen kryptographischen Schlüssel entschlüsselbar ist. In einer verbundenen Ausgestaltung des Verfahrens und der Vorrichtung enthält die Prüfantwort den in dem Identifizierungsmodul mittels des kryptographischen Schlüssels entschlüsselten Antwortschlüssel. Bei diesen Ausgestaltungen wird anhand der Prüfanfrage und der darauf von dem Identifizierungsmodul übermittelten Prüfantwort festgestellt, ob ein bestimmtes Identifizierungsmodul, welches über den kryptographischen Schlüssel verfügt, in das Kommunikationsendgerät eingesetzt ist. Das Identifizierungsmodul und der Schlüssel können beispielsweise einem bestimmten Nutzer zugeordnet sein, der für den Zugriff auf die Applikation bzw. geschützte Funktion der Applikation berechtigt ist.

Der Antwortschlüssel wird vorzugsweise mittels eines Zufallsalgorithmus oder eines Pseu-do-Zufallsalgorithmus erzeugt. Ferner wird der Antwortschlüssel vorzugsweise lediglich für eine Prüfanfrage verwendet. Diese Maßnahmen erhöhen die Sicherheit gegenüber Manipulationen mit von unberechtigten Dritten aufgedeckten Antwortschlüsseln.

Eine weitere Ausführungsform des Verfahrens und der Vorrichtung zeichnet sich dadurch aus, dass das Identifizierungsmodul die Prüfantwort erzeugt und/oder der Antwortschlüssel entschlüsselt, nachdem das Identifizierungsmodul eine Nutzerauthentifizierung erfolgreich durchgeführt hat. Die Nutzerauthentifizierung umfasst in einer Ausführungsform des Verfahrens und der Vorrichtung eine Prüfung eines von dem Nutzer an dem Kommunikationsendgerät eingegebenen Authentisierungsmerkmals. Bei dem Authentisierungsmerkmal kann es sich insbesondere um eine persönliche Identifikationsnummer (PIN) handeln. Durch eine derartige Nutzerauthentifizierung kann sichergestellt werden, dass nicht nur das Identifizierungsmodul des berechtigten Nutzers in das Kommunikationsendgerät eingesetzt ist, sondern dass das Kommunikationsendgerät aktuell auch von dem berechtigten Nutzer verwendet wird.

Eine Ausgestaltung des Verfahrens und der Vorrichtung sieht vor, dass die Prüfanfrage in einer Over-the-air (OTA)-Nachricht von der Übermittlungseinrichtung an das Identifizierungsmodul gesendet wird. OTA-Mechanismen sind an sich bekannt und ermöglichen einen gesicherten Fernzugriff auf Identifizierungsmodule. Vorteilhaft kann hier ein solcher OTA-Mechanismus verwendet werden, um die Prüfanfrage sicher an das Identifizierungsmodul zu übermitteln. Weiterhin sieht eine Ausgestaltung des Verfahrens und der Vorrichtung vor, dass der Antwortschlüssel in der Prüfantwort unverschlüsselt von dem Identifizierungsmodul an die Übermittlungseinrichtung gesendet wird. Durch den Verzicht auf die Verschlüsselung kann die Übermittlung der Prüfantwort vereinfacht werden. Eine hinreichende Sicherheit ist auch bei einem Verzicht auf eine Verschlüsselung aufgrund des zufälligen Charakters des Antwortschlüssels und seiner einmaligen Verwendung gewährleistet.

In einer weiteren Ausgestaltung des Verfahrens und der Vorrichtung sendet die Applikation die Anforderung zur Übermittlung der Prüfanfrage an das Identifizierungsmodul aufgrund eines Zugriffsversuchs eines Nutzers des Kommunikationsendgeräts auf eine geschützte Funktion der Applikation an die Übermittlungseinrichtung sendet. Insbesondere ist es bei dieser Ausgestaltung möglich, mittels der Prüfanfrage eine Nutzerauthentifizierung für den Zugriff auf die geschützte Funktion der Applikation vorzunehmen. Eine weitere Ausführungsform des Verfahrens und der Vorrichtung ist dadurch gekennzeichnet, dass die Applikation einen Zugriff auf die geschützte Funktion in Abhängigkeit von der Benachrichtigung über die erhaltene Prüfantwort freigibt. Dabei kann die Applikation etwa den Zugriff auf die geschützte Funktion freigeben, wenn anhand der Prüfantwort eine erfolgreiche Nutzerauthentifizierung festgestellt worden ist. Die Applikation kann insbesondere den Aufbau einer gesicherten Kommunikationsverbindung, insbesondere eines Sprach- und/oder Videoanrufs, mit einem Kommunikationspartner ermöglichen, wobei der Aufbau der Kommunikationsverbindung in Abhängigkeit von der Benachrichtigung über die erhaltene Prüfantwort freigegeben wird. Insbesondere kann die Freigabe nach einer erfolgreichen Nutzerauthentifizierung anhand der Prüfanfrage erfolgen, die anhand der Prüfantwort festgestellt wird.

Darüber hinaus ist eine Ausführungsform des Verfahrens und der Vorrichtung dadurch gekennzeichnet, dass der in der Prüfanfrage enthaltene verschlüsselte Antwortschlüssel von der Applikation des Kommunikationsendgeräts erzeugt wird. Eine verbundene Ausgestaltung des Verfahrens und der Vorrichtung sieht vor, dass die Übermittlungseinrichtung den in der Prüfantwort erhaltene Antwortschlüssel an die Applikation weiterleitet. Diese Ausgestaltungen ermöglichen der Applikation, die anhand der Prüfanfrage vorgenommene Prüfung, bei der es sich, wie zuvor beschrieben, insbesondere um eine Nutzerauthentifizierung handeln kann, selbst vorzunehmen. Gleichfalls kann es jedoch auch vorgesehen sein, dass die Prüfanfrage und insbesondere der Antwortschlüssel aufgrund der Anforderung der Applikation in der Übermittlungseinrichtung erzeugt wird und dass die Übermittlungseinrichtung die Prüfantwort und insbesondere einen darin enthaltenen Antwortschlüssel auswertet und das Ergebnis der Auswertung in der Benachrichtigung an die Applikation meldet.

Neben der hierin beschriebenen Applikation wird zudem ein Kommunikationsendgerät bereitgestellt, welches die Applikation sowie ein Identifizierungsmodul umfasst. Ferner wird ein System bereitgestellt, welches eine Vorrichtung der hierin beschriebenen Art sowie ein Kommunikationsendgerät umfasst. In dem System kann die Vorrichtung, wie zuvor bereits erwähnt, über ein Kommunikationsnetz mit dem Kommunikationsendgerät verbunden sein. Insbesondere kann die Vorrichtung in einem Mobilfunknetz angeordnet sein. Ein Datenaustausch zwischen der Vorrichtung und dem Kommunikationsendgerät kann in diesem Fall über das Mobilfunknetz erfolgen. Des Weiteren wird ein System bereitgestellt, welche das Kommunikationsendgerät mit der beschriebenen Applikation und eine Übertragungseinrichtung umfasst. Die Übermittlungseinrichtung ist dabei dazu ausgestaltet:
- eine von einer Applikation des Kommunikationsendgeräts gesendete Prüfanfrage an das Identifizierungsmodul des Kommunikationsendgeräts zu empfangen;
- die Prüfanfrage aufgrund der Anforderung an das Identifizierungsmodul zu übermitteln;
- eine in dem Identifizierungsmodul ermittelte Prüfantwort auf die Prüfanfrage zu empfangen; und
- eine Benachrichtigung über die erhaltene Prüfantwort an die Applikation des Kommunikationsendgeräts zu übermitteln.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines Kommunikationsendgeräts sowie von Komponenten eines Mobilfunknetzes zur Übermittlung einer Prüfanfrage an das Identifizierungsmodul des Endgeräts und
- Fig. 2: eine schematische Veranschaulichung von Schritten, um eine Prüfanfrage an das Identifizierungsmodul des Endgeräts zu senden und das Prüfungsergebnis an eine Applikation des Endgeräts zu melden.

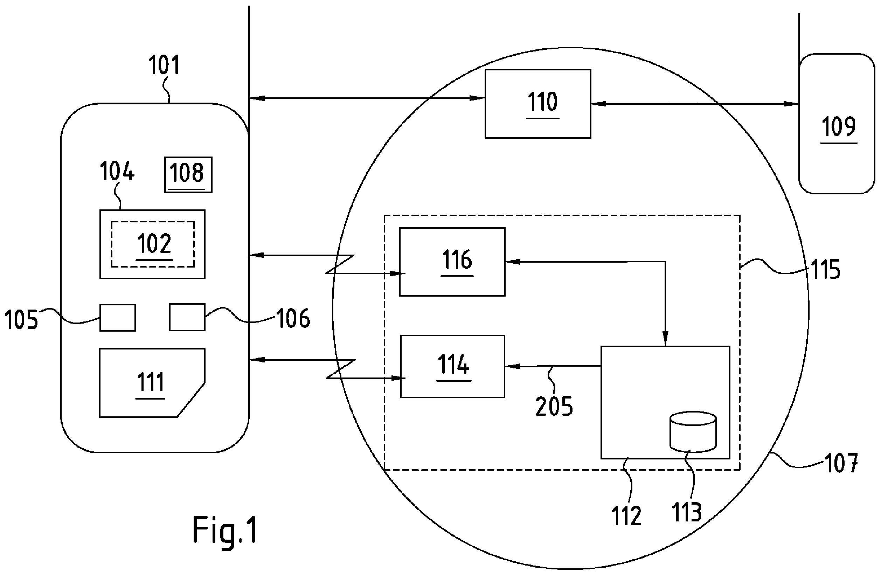

Das in der Figur 1 gezeigte Kommunikationsendgerät 101 weist eine Applikation 102 auf, die auf kryptografische Funktionen eines in das Kommunikationsendgerät eingesetzten Identifizierungsmoduls 111 zugreift. Die Applikation 102 ist in einer beispielhaften Ausführungsform ein Programm zur sicheren Kommunikation des Nutzers des Kommunikationsendgeräts 102 mit einem Kommunikationspartner 109. Die Kommunikation kann per Sprach- und/oder Videoübertragung erfolgen, die etwa unter Verwendung eines paketvermittelnden Datendienstes als VoIP (Voice-over-IP)-Verbindungen hergestellt werden, oder per elektronischer Nachrichtenübertragung, insbesondere per E-Mail. Kryptografische Prozesse, die in dem Identifizierungsmodul 111 ausgeführt werden, können bei der Applikation 102 zur Nutzerauthentifizierung genutzt werden. Insbesondere kann sichergestellt werden dass das Identifizierungsmodul 111 des berechtigten Nutzers in das Kommunikationsendgerät 101 eingesetzt ist und die in dem Kommunikationsendgerät 101 ausgeführte Applikation 102 somit von dem berechtigten Nutzer selbst und nicht von einem unberechtigten Dritten genutzt wird. Gleichfalls können auch andere Zugriffe der Applikation auf kryptografische Funktionen des Kommunikationsendgeräts 101 vorgesehen sein.

Das Endgerät 101 ist als ein elektronisches Datenverarbeitungsgerät ausgestaltet, das von dem Nutzer insbesondere zur Kommunikation mit dem Kommunikationspartner verwendet werden kann. Das Endgerät 101 kann mobil ausgeführt sein. Dabei kann es sich beispielsweise um ein Mobiltelefon, ein Smartphone, ein Tablet- oder Notebook-Computer oder dergleichen handeln. Gleichfalls kann das Endgerät 101 als ein stationäres Kommunikationsendgerät, wie beispielsweise ein Personal Computer (PC), ausgebildet sein.

Das Endgerät 101 umfasst in der dargestellten Ausführungsform ein Terminal 103 mit einer Prozessoreinheit 104, die einen oder mehrere Prozessoren enthält. Die Prozessoreinheit 104 dient zur Ausführung von Programmen zur Steuerung des Kommunikationsendgeräts 101. Ferner wird in der Prozessoreinheit 104 die Applikation 102 ausgeführt, welche auf die kryptografischen Funktionen des Identifizierungsmoduls 111 zugreift. Darüber hinaus können in der Prozessoreinheit 104 weitere Applikationen ausgeführt werden. Die Prozessoreinheit 104 ist mit einer Speichereinheit 105 verbunden, in der Softwarecodes der in der Prozessoreinheit 104 ausführbaren Steuerungsfunktionen und Applikationen sowie die von den Applikationen verwendeten Nutzdaten gespeichert sind. Weiterhin umfasst das Terminal 103 eine mit der Prozessoreinheit 104 gekoppelte Benutzerschnittstelle 106, die Einrichtungen zur Interaktion zwischen dem Endgerät 101 und dessen Nutzer umfasst. Insbesondere kann die Benutzerschnittstelle 106 eine als Display ausgestaltete visuelle Ausgabeeinrichtung sowie eine oder mehrere Eingabeeinrichtungen, wie beispielsweise eine Tastatur und/oder einen Joystick aufweisen. Das Display kann auch als ein sogenannter Touchscreen ausgestaltet sein und damit sowohl als visuelle Ausgabeeinrichtung als auch als Eingabeeinrichtung dienen. Zudem kann die Benutzerschnittstelle 106 weitere Ein- und Ausgabemittel bereitstellen, etwa einen Lautsprecher und ein Mikrofon für die Ein- und Ausgabe von Audiosignalen.

Das Kommunikationsendgerät 101 kann über ein in der Figur nicht dargestelltes Zugangsnetz drahtlos mit einem Mobilfunknetz 107 verbunden werden, um von dem Mobilfunknetz 107 bereitgestellte Mobilfunkdienste, wie beispielsweise Dienste zur Sprach- und Nachrichtenübermittlung zu nutzen. Zur Verbindung mit dem Mobilfunknetz 107 stellt das Terminal 103 des Endgeräts 101 ein Funkmodul 108 bereit, das über die erforderliche Funktechnik zur Verbindung mit dem Zugangsnetz, wie beispielsweise einer Antenne mit zugehörigen Komponenten verfügt. Wie in der Figur 1 beispielhaft gezeigt, kann der Datenaustausch zwischen dem Endgerät 101 und dem Kommunikationspartner 109 über das Mobilfunknetz 107 unter Verwendung eines von dem Mobilfunknetz 107 bereitgestellten Kommunikationsdienstes vorgenommen werden. Hierbei kann der Datenaustausch beispielsweise über einen dem Kommunikationsdienst zugeordneten Netzknoten 110 des Mobilfunknetzes erfolgen. Gleichfalls kann das Endgerät 101 jedoch auch zur Verbindung mit einem weiteren, in der Figur nicht gezeigten Kommunikationsnetz ausgerüstet sein und der Datenaustausch mit dem Kommunikationspartner 109 über das weitere Kommunikationsnetz abgewickelt werden. Beispiele für weitere Kommunikationsnetze, mit denen das Endgerät 101 verbindbar sein kann, sind WLAN (Wireless Local Area Network)-Netze und drahtgebundene Kommunikationsnetze.

Zur Verwendung beim Betrieb des Endgeräts 101 in dem Mobilfunknetz 107 ist in das Terminal 103 ein Identifizierungsmodul 111 eingesetzt. Insbesondere stellt das Identifizierungsmodul 111 Daten und Prozesse bereit, die für den Zugriff des Endgeräts 101 auf das Mobilfunknetz 107 benötigt werden. Unter anderem werden von dem Identifizierungsmodul 111 bereitgestellte Daten und Prozesse für die Teilnehmeridentifizierung und -authentisierung in dem Mobilfunknetz 107 herangezogen. Die Teilnehmeridentifizierung und -authentisierung wird üblicherweise bei der Einbuchung in das Mobilfunknetz 107 vorgenommen und umfasst die Identifizierung des Identifizierungsmoduls 111 anhand einer Kennung, die von dem Identifizierungsmodul 111 an das Mobilfunknetz 107 gesendet wird, sowie die Authentisierung des Identifizierungsmoduls 111 anhand von Informationen, die in dem Identifizierungsmodul 111 unter Einsatz von vorgegebenen Algorithmen und in dem Identifizierungsmodul 111 gespeicherten Daten berechnet werden. Die Berechnung kann eine kryptografische Verarbeitung einer Information umfassen, die vom Mobilfunknetz 107 gesendet wird, und deren Ergebnis als Antwort zur Prüfung an das Mobilfunknetz 107 zurückgesendet wird. Das Identifizierungsmodul 111 verfügt über eine spezielle Sicherheitsarchitektur, die einen unauthorisierten Zugriff auf Daten und Prozesse, insbesondere auf die zuvor genannten für Teilnehmeridentifizierung und -authentisierung auf das Mobilfunknetz 107 verwendeten Daten und Prozesse verhindert.

Für den Zugriff auf die Daten und Funktionen des Identifizierungsmoduls 111 nimmt das Identifizierungsmodul 111 eine Nutzerauthentifizierung vor. Diese kann insbesondere dadurch vorgenommen werden, dass der Nutzer auf eine entsprechende Aufforderung hin ein Authentisierungsmerkmal an der Benutzerschnittstelle 106 des Kommunikationsendgeräts 101 eingibt, welches innerhalb des Kommunikationsendgeräts 101 dem eingesetzten Identifizierungsmodul 111 zugeleitet und in dem Identifizierungsmodul 111 geprüft wird. Nur nach erfolgreicher Prüfung des Authentisierungsmerkmals wird der Zugriff auf die Daten und Funktionen des Authentisierungsmoduls freigegeben, wobei die Prüfung dann erfolgreich ist, wenn das eingegebene Authentisierungsmerkmal einem entsprechenden, in dem Identifizierungsmodul 111 hinterlegten Authentisierungsmerkmal entspricht. Bei dem Authentisierungsmerkmal kann es sich beispielsweise um eine persönliche Identifikationsnummer (PIN) des Nutzers handeln. Die Eingabe und Prüfung des Authentisierungsmerkmals erfolgt vorzugsweise bereits kurz nach dem Einschalten des Kommunikationsendgeräts 101, so dass die Funktionen des Identifizierungsmoduls 111 frühzeitig nach dem Einschalten zur Verfügung stehen.

Bei dem in der Figur 1 gezeigten Endgerät 101 nutzt überdies die Applikation 102 kryptografische Funktionen des Identifizierungsmoduls 111. Zur Ausführung der von der Applikationen 102 angesprochenen kryptografischen Funktionen ist in dem Identifizierungsmodul 111 wenigstens ein geheimer kryptographischer Schlüssel hinterlegt Der kryptografische Schlüssel ist in sicherer Weise in dem Identifizierungsmodul 111 gespeichert. Vorzugsweise wird dabei sichergestellt, dass der Schlüssel das Identifizierungsmodul 111 auch im Zusammenhang mit der Durchführung von kryptografischen Operationen nicht verlässt. Insbesondere beinhaltet eine Ausführungsform, dass der in dem Identifizierungsmodul gespeicherte geheime Schlüssel ein Bestandteil eines asymmetrischen Schlüsselpaares ist, welches dem Nutzer des Kommunikationsendgeräts 111 und der Applikation 102 zugeordnet ist. Ein dem geheimen Schlüssel zugehöriger öffentlicher Schlüssel des Nutzers ist in dieser Ausführungsform in der Applikation 102 hinterlegt.

Der kryptografische Schlüssel wird in einer Ausgestaltung zur Beantwortung einer Prüfanfrage verwendet, die aufgrund einer Anforderung der Applikation 102 an das Identifizierungsmodul 111 übermittelt wird. Anhand des kryptografischen Schlüssels bestimmt das Identifizierungsmodul 111 die Antwort auf die Prüfanfrage und sendet die Prüfantwort zurück, wobei die Prüfantwort an die Applikation 102 gemeldet wird. Die Prüfanfrage enthält einen vorzugsweise zufällig oder pseudo-zufällig generierten Antwortschlüssel, der mit dem im Identifizierungsmodul 111 gespeicherten öffentlichen Schlüssel des Nutzers verschlüsselt ist. Im Identifizierungsmodul 111 wird der Antwortschlüssel mithilfe des in dem Identifizierungsmodul 111 hinterlegten geheimen Schlüssels entschlüsselt und in der Prüfantwort zurückgesendet. Der in der Prüfantwort enthaltene Schlüssel wird mit dem zuvor verschlüsselten und danach zumindest temporär gespeicherten Antwortschlüssel verglichen. Bei einer Übereinstimmung des erhaltenen Antwortschlüssels und des gespeicherten Antwortschlüssels wird die Nutzerauthentifizierung als erfolgreich angesehen.

Nach erfolgreicher Nutzerauthentifizierung kann die Applikation dem Nutzer des Kommunikationsendgeräts 111 Zugriff auf die Applikation 102 oder auf geschützte Funktionen der Applikation 102 gewähren. Falls es sich, wie zuvor beschrieben, um eine Applikation 102 zur sicheren Kommunikation mit einem Kommunikationspartner handelt, so kann beispielsweise vorgesehen sein, dass nach erfolgreicher Nutzerauthentifizierung die Kommunikation mit dem Kommunikationspartner freigeschaltet wird.

Das Identifizierungsmodul 111 ist in einer Ausgestaltung ein gesicherter Chip, der in einer Chipkarte endhalten ist, welche lösbar in einen Kartenleser des Terminals 103 eingesteckt werden kann. In dieser Ausgestaltung kann es sich bei dem Identifizierungsmodul 111 um eine SIM- oder USIM-Karte handeln, die für den Zugriff auf ein Mobilfunknetz 107 verwendet wird, das als GSM-, UMTS-, oder LTE-Netz ausgeführt sein kann. Gleichfalls kann das Identifizierungsmodul 111 jedoch auch ein Chip sein, der fest im Endgerät 101 montiert ist. Der Chip kann auch in dieser Ausgestaltung als ein SIM- oder USIM-Chip ausgestaltet sein. In einer weiteren Ausführungsform ist das Identifizierungsmodul 111 ein speziell gesichertes Softwaremodul das in der Prozessoreinheit 104 des Terminals 103 ausgeführt wird.

Das Identifizierungsmodul 111 ist in einem Mobilfunknetz 107 registriert, dass auch als das Heimatnetz des Identifizierungsmodul 111 bzw. des Nutzers des Endgeräts 101 bezeichnet wird und welches in der Figur 1 dargestellt ist. Von dem Betreiber des Heimatnetzes oder in dessen Auftrag wird das Identifizierungsmodul 111 an den Nutzer ausgegeben und zuvor in einem sicheren Prozess vorkonfiguriert. Hierbei werden von dem Betreiber des Heimatnetzes 111 vorgegebene Daten zur Identifizierung und Authentisierung des Identifizierungsmoduls 111, von dem Betreiber vorgegebene Prozesse, wie beispielsweise bei der Authentisierung eingesetzte Verschlüsselungsalgorithmen, und weitere vom Betreiber vorgegebene Daten in dem Identifizierungsmodul 111 installiert. Die Validierungsinformation kann ebenfalls bereits bei der Vorkonfigurierung in dem Identifizierungsmodul 111 hinterlegt werden. Alternativ ist jedoch eine nachträgliche Installation ebenfalls möglich.

Nach der Ausgabe kann in einer Ausgestaltung per Fernzugriff auf die in dem Mobilfunknetz 107 registrierten Identifizierungsmodule 111 zugegriffen werden, um Anpassungen vorzunehmen. Beispielsweise können Daten und Prozesse bzw. Programme in einem Identifizierungsmodul 111 verändert, ergänzt oder gelöscht werden. Mittels des Fernzugriffs können derartige Anpassungen vorgenommen werden, ohne dass Identifizierungsmodule 111 in einer Servicestelle des Mobilfunkanbieters oder eines anderen Anbieters angepasst oder neu ausgegeben werden müssen.

Für den Fernzugriff auf ein Identifizierungsmodul 111 kann ein OTA-Mechanismus eingesetzt werden, bei dem ein OTA-Server 112 eine Nachricht an das betreffende Identifizierungsmodul 111 sendet, die Daten zur Installation in den Identifizierungsmodul 111 und/oder Befehle zur Änderung von Daten oder zur Ausführung von Prozesse und Programmen in dem Identifizierungsmodul 111 enthalten kann. Der OTA-Server 112 kann in dem Mobilfunknetz 107 angeordnet sein, wie in der Figur 1 gezeigt, und beispielsweise von dem zugehörigen Mobilfunkanbieter betrieben werden, oder er kann außerhalb des Mobilfunknetzes 107 von einer vertrauenswürdigen Organisation betrieben werden. Ein Beispiel für einen OTA-Mechanismus für den Fernzugriff auf Chipkarten, der vorliegend eingesetzt werden kann, wurde vom ETSI (European Telecommunications Standard Institute) bzw. dem 3GPP (3rd Generation Partnership Project) in den Standarddokumenten GSM 03.48, TS 23.048 sowie TS 102 225, TS 102 226, TS 31.114 und TS 31.115 spezifiziert.

Zur Sicherung des Fernzugriffs auf die Identifizierungsmodule 111 und vor allem zum Schutz vor unberechtigten Zugriffen auf die Identifizierungsmodule 111 werden kryptographische Mechanismen eingesetzt. Die von dem OTA-Server 112 an ein Identifizierungsmodul 111 gesendeten Nachrichten, die im Folgenden auch als OTA-Nachrichten bezeichnet werden, sind mit einem kryptographischen Schlüssel verschlüsselt, um sie vor unberechtigten Manipulation auf dem Transportweg zu schützen, und zu verhindern, dass Unbefugte OTA-Nachrichten an ein Identifizierungsmodul 111 senden können. Der Schlüssel ist dem jeweiligen Identifizierungsmodul 111 vorzugsweise eindeutig zugeordnet und unter einer Kennung des Identifizierungsmoduls 111 in einer Datenbank 113 des OTA-Servers 112 hinterlegt. Bei den Kennungen kann es sich um die auch als Rufnummern der Identifizierungsmodule 111 dienenden MSISDNs (Mobile Subscriber Integrated Services Digital Network Number) handeln, die den Identifizierungsmodulen 11 zugeordnet sind. Zusätzlich oder alternativ kann die Kennung auch andere dem Identifizierungsmodul zugeordneten Identifizierungscodes umfassen. In dem Identifizierungsmodul 111 werden empfangene OTA-Nachrichten mit einem entsprechen kryptographischen Schlüssel entschlüsselt. Ferner wird die Authentizität der Nachrichten in den Identifizierungsmodulen 111 überprüft. Der in dem OTA-Server 112 zur Verschlüsselung verwendete Schlüssel und der in dem Identifizierungsmodul 111 zur Entschlüsselung verwendete Schlüssel, die nachfolgend auch als OTA-Schlüssel bezeichnet werden, können ein symmetrisches Schlüsselpaar bilden. Gleichfalls kann jedoch auch die Verwendung von asymmetrischen Schlüsselpaaren vorgesehen sein. Der in dem Identifizierungsmodul 111 verwendete OTA-Schlüssel kann bei der zuvor beschriebenen Vorkonfigurierung des Identifizierungsmoduls 111 in diesem hinterlegt werden.

Die OTA-Nachrichten werden über einen in dem Mobilfunknetz 107 bereitgestellten Datenübertragungsdienst übertragen. Insbesondere kann ein Kurznachrichtendienst verwendet werden, bei dem es sich in einer Ausgestaltung um den an sich bekannten SMS (Short Message Service) handelt. Bei dem SMS werden Kurznachrichten von einem SMSC (Short Message Service Center) 114 des Mobilfunknetzes 107 an die mit dem Mobilfunknetz 107 verbundenen Kommunikationsendgeräte 101 gesendet. Zur Übertragung von OTA-Nachrichten besitzt der OTA-Server 112 daher eine SMS-Schnittstelle, über die er mit dem SMSC 114 verbunden ist. Um eine OTA-Nachricht an ein Identifizierungsmodul 111 zu übertragen, übergibt der OTA-Server 112 über die SMS-Schnittstelle den verschlüsselten Inhalt der OTA-Nachricht zusammen mit der dem Identifizierungsmodul 111 zugeordneten Rufnummer (MSISDN) an das SMSC 114. Das SMSC 114 sendet daraufhin eine als SMS-Nachricht ausgestaltete OTA-Nachricht unter Verwendung der dem Identifizierungsmodul 111 zugeordneten Rufnummer an das betreffende Kommunikationsendgerät 101. Dies geschieht grundsätzlich in der gleichen Weise wie die Übermittlung anderer SMS-Nachrichten an das Mobilfunkendgerät 107. Die OTA-Nachricht wird jedoch aufgrund eines enthaltenen besonderen Kennzeichens von dem Terminal 103 an das Identifizierungsmodul 111 weitergeleitet. Dies geschieht vorzugsweise transparent, d.h. unsichtbar für Nutzer des Endgeräts 101. In dem Identifizierungsmodul 111 wird die Nachricht nach dem Empfang zunächst entschlüsselt und dabei, wie zuvor erläutert, authentisiert. Nach erfolgreicher Entschlüsselung, wird die Nachricht ausgewertet, und darin enthaltene Steuerbefehle werden ausgeführt.

Bei dem in der Figur 1 veranschaulichtem Mobilfunknetz 107 bilden der OTA-Server 112 und das SMSC 114 Bestandteile einer Übermittlungseinrichtung 115, die dazu verwendet wird, die Prüfanfrage an das Identifizierungsmodul 111 zu senden und die in dem Identifizierungsmodul 111 ermittelte Prüfantwort an die Applikation 102 zu melden. Die Übermittlungseinrichtung 115 enthält zudem einen Kommunikationsserver 116, der ebenfalls in dem Mobilfunknetz 107 angeordnet sein kann. Der Kommunikationsserver 116 ist dazu in der Lage, mit der Applikation 102 des Endgeräts 101 Daten auszutauschen. Der Datenaustausch erfolgt über einen von dem Mobilfunknetz 107 bereitgestellten Kommunikationsdienst. In einer Ausführungsform wird über das Mobilfunknetz 107 eine paket- oder leitungsvermittelte Datenverbindung zwischen dem Endgerät 101 und dem Kommunikationsserver 116 aufgebaut, über die Nachrichten zwischen der Applikation 102 und dem Kommunikationsserver 116 ausgetauscht werden können. Alternativ kann vorgesehen sein, für den Nachrichtenaustausch einen Nachrichtendienst des Mobilfunknetzes 107, wie beispielsweise SMS oder MMS (Multimedia Messaging Service), zu nutzen.

Die Applikation 102 ist zur Durchführung des Datenaustauschs mit dem Kommunikationsserver 116 vorzugsweise dazu ausgestaltet, auf Schnittstellen zuzugreifen, die von dem Endgerät 101 bereitgestellt werden und die automatische Nutzung einer Datenverbindung in das Mobilfunknetz 107 oder das Senden sowie den Empfang von Nachrichten über einen von dem Mobilfunknetz 107 bereitgestellten Nachrichtendienst ermöglichen. Über eine solche Schnittstelle wird die Kommunikation zwischen der Applikation 102 und dem Kommunikationsserver 116 in einer Ausgestaltung transparent für den Nutzer des Endgeräts 101 durchgeführt. Hierbei werden dem Nutzer vorzugsweise keine Informationen über die Übermittlung einzelner Nachrichten und deren Inhalt angezeigt. Es kann indes vorgesehen sein, dass der Nutzer von der Applikation 102 darüber informiert wird, dass ein Datenaustausch über das Mobilfunknetz 107 erfolgt.

Der Einsatz der von dem Endgerät 101 getrennten Übermittlungseinrichtung 115 zur Übermittlung der Prüfanfrage an das Identifizierungsmodul 111 ermöglicht, die Prüfanfrage auch in solchen Endgeräten 101 an das Identifizierungsmodul 111 senden zu können, die eine entsprechende direkte Kommunikation zwischen der Applikation 102 102 und dem Identifizierungsmodul 111 über eine geräteinterne Schnittstelle nicht zulassen.

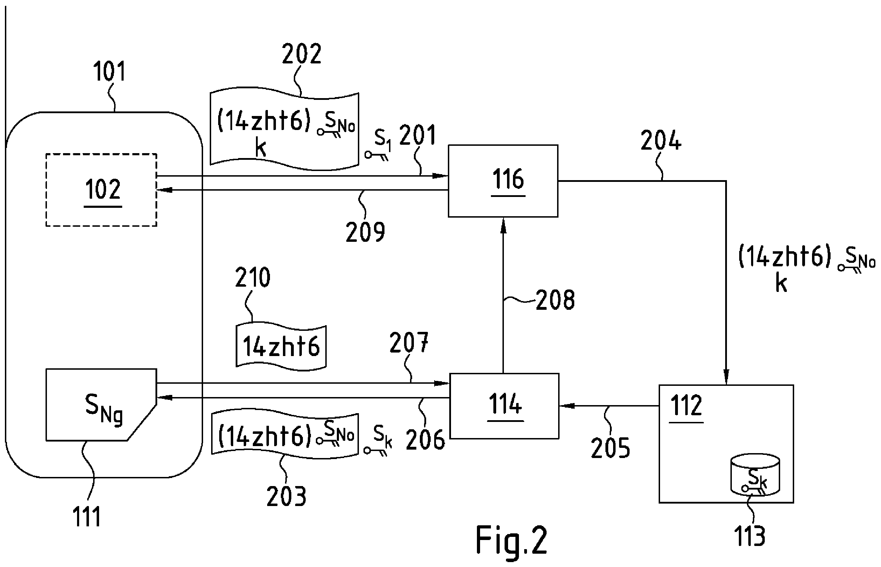

Unter Bezugnahme auf die schematische Darstellung in der Figur 2 werden nun beispielhaft Schritte beschrieben, die in einer Ausgestaltung zur Erzeugung, Übermittlung und Beantwortung der Prüfanfrage in Verbindung mit dem in der Figur 1 gezeigten Endgerät 101 und der dargestellten Übermittlungseinheit 115 des Mobilfunknetzes 107 durchgeführt werden können.

Zunächst übermittelt die Applikation eine Anforderungsnachricht 202 in dem Schritt 201 an den Kommunikationsserver 116 der Übermittlungseinrichtung 115. Die Anforderungsnachricht 202 wird etwa aufgrund eines Zugriffsversuchs des Nutzers des Kommunikationsendgeräts auf die Applikation bzw. eine geschützte Funktion der Applikation erzeugt und gesendet. Insbesondere kann die Anforderungsnachricht 202 aufgrund eines Startens der Applikation durch den Nutzer gesendet werden. Sofern es sich bei der Applikation um eine Anwendung zur sicheren Kommunikation mit einem Kommunikationspartner handelt, kann die Anforderungsnachricht 202 beispielsweise dann gesendet werden, wenn der Nutzer ein Kommunikationsverbindung zu einem Kommunikationspartner aufbauen möchte oder wenn er eine eingehende Kommunikationsverbindung annehmen möchte.

In einer Ausgestaltung enthält die Anforderungsnachricht bereits die Prüfanfrage und eine Anweisung zur Übermittlung der Prüfanfrage an das Identifizierungsmodul 111 sowie eine Kennung K des Endgeräts 101 bzw. des enthaltenen Identifizierungsmoduls 111. Bei der Kennung K kann es sich beispielsweise um die dem Identifizierungsmodul 111 zugeordnete MSISDN handeln. Die in der Anforderungsnachricht 202 enthaltene Prüfanfrage wird in einer Ausgestaltung mittels eines Antwortschlüssels erzeugt, bei dem es sich insbesondere um eine zufällig oder pseudo-zufällig generierte Zeichenfolge handeln kann. Der Antwortschlüssel wird wie zuvor erläutert mit dem öffentlichen Schlüssel SNo eines dem Identifizierungsmodul 111 zugeordneten Schlüsselpaares verschlüsselt, um die Prüfanfrage zu generieren. Neben dem öffentlichen Schlüssel SNo umfasst das Schlüsselpaar den geheimen in dem Identifizierungsmodul 111 gespeicherten Schlüssel SNg. Der Antwortschlüssel lautet bei dem in der Figur 2 gezeigten Beispiel 14zht6.

In einer alternativen, nicht in der Figur 2 gezeigten Ausführungsform ist die Prüfanfrage nicht in der Anforderungsnachricht 202 enthalten, sondern wird in dem Kommunikationsserver 116 erzeugt. Bei dieser Ausführungsform enthält die Anforderungsnachricht 202 neben der Kennung K des Identifizierungsmoduls 111 eine Anweisung zur Generierung der Prüfanfrage und zur Übermittlung der Prüfanfrage an das Identifizierungsmodul 111. Die Erzeugung der Prüfanfrage erfolgt nach dem Erhalt der Anforderungsnachricht 202 in dem Kommunikationsserver 116 in der gleichen Weise wie zuvor beschrieben.

Die Kommunikation zwischen der Applikation 102 und dem Kommunikationsserver 116 kann gegen Manipulationen gesichert werden, um etwa zu verhindern, dass die Anforderungsnachricht 202 auf dem Transportweg verändert wird. Die Sicherung gegen unberechtigte Zugriffe erfolgt in einer Ausgestaltung optional durch eine Verschlüsselung der Anforderungsnachricht 202 mit einem kryptografischen Schlüssel S1, der Bestandteil eines zwischen der Applikation 102 und dem Kommunikationsserver 116 etablierten symmetrischen oder asymmetrischen Kryptosystems ist.

Wenn der Kommunikationsserver 116 die Anforderungsnachricht 202 erhält, nimmt der Kommunikationsserver 116 eine Auswertung der Anforderungsnachricht 202 vor, bei welcher er die Prüfanfrage bzw. die Anweisung zur Erzeugung der Prüfanfrage sowie die Kennung K des Identifizierungsmoduls 111 aus der Anforderungsnachricht 202 ausliest. Ist eine Verschlüsselung der Anforderungsnachricht 202 vorgesehen entschlüsselt der Kommunikationsserver 116 die Nachricht 202 vor der Auswertung mit dem zur Verschlüsselung verwendeten Schlüssel S1 zugeordneten Entschlüsselungsschlüssel, der in dem Kommunikationsserver 116 hinterlegt ist.

Aufgrund der Auswertung der erhaltenen Anforderungsnachricht 202 bereitet der Kommunikationsserver 116 die Übermittlung einer OTA-Nachricht 203 an das Identifizierungsmodul 111 des Endgeräts vor. Der Inhalt der OTA-Nachricht 203 umfasst die aus der Anforderungsnachricht 202 übernommene oder ggf. aufgrund der Anforderungsnachricht 202 in dem Kommunikationsserver 116 erzeugte Prüfanfrage mit dem verschlüsselten Antwortschlüssel sowie eine an das Identifizierungsmodul 111 gerichtete Anweisung zur Beantwortung der Prüfanfrage. Die Prüfanfrage wird von dem Kommunikationsserver 116 in dem Schritt 204 zusammen mit der Kennung K des Identifizierungsmoduls 111 an den OTA-Server 112 übergeben. Die Kommunikation zwischen dem Kommunikationsserver 116 und dem OTA-Server 112 erfolgt innerhalb des Mobilfunknetzes 107 und ist in einer geeigneten Weise gegen eine unberechtigte Einflussnahme gesichert. Der OTA-Server 112 ermittelt anhand der empfangenen Kennung K den zu dem Identifizierungsmodul 111 gehörenden OTA-Schlüssel SK und erzeugt daraufhin die mit dem OTA-Schlüssel SK verschlüsselte OTA-Nachricht 203, welche die von dem Kommunikationsserver 116 übergebene Prüfanfrage enthält. Die OTA-Nachricht 203 wird sodann an das Endgerät 101 übermittelt. Dies geschieht in der dargestellten und zuvor beschriebenen Ausgestaltung mittels des SMS, indem die OTA-Nachricht 203 zunächst in dem Schritt 205 an das SMSC 114 übergeben und von diesem in dem Schritt 206 an das Endgerät 101 gesendet wird.

In dem Endgerät 101 wird die OTA-Nachricht 203 an das Identifizierungsmodul 111 übergeben, welches die OTA-Nachricht 203 mit dem in dem Identifizierungsmodul 111 hinterlegten, dem Schlüssel SK zugeordneten OTA-Schlüssel entschlüsselt und nach der Entschlüsselung weiter verarbeitet. Hierbei erkennt das Identifizierungsmodul 111 die Anweisung zur Beantwortung der Prüfanfrage und führt daraufhin die kryptografischen Operationen zur Beantwortung der Prüfanfrage durch. Diese Operationen umfassen die Entschlüsselung des in der Prüfanfrage enthaltenen Antwortschlüssels mit dem in dem Identifizierungsmodul 111 hinterlegten kryptografischen Schlüssel SNg. Nach erfolgreicher Entschlüsselung fügt das Identifizierungsmodul 111 den entschlüsselten Antwortschlüssel in die Prüfantwort 210 ein, die von dem Identifizierungsmodul 111 an das Terminal 103 des Endgeräts 101 übergeben und dann von dem Endgerät 101 an den Kommunikationsserver 116 übermittelt wird. Dies geschieht bei der in der Figur 2 dargestellten Ausgestaltung mittels des SMS, in dem die Prüfantwort zunächst in einer SMS-Nachricht in dem Schritt 207 an das SMSC 114 gesendet und von diesem in dem Schritt 208 an den Kommunikationsserver 116 übergeben wird. Falls der Antwortschlüssel in dem Identifizierungsmodul 111 nicht entschlüsselt werden kann, kann vorgesehen sein, dass das Identifizierungsmodul 111 eine Fehlermeldung als Prüfantwort an den Kommunikationsserver 116 übermittelt.

Der Kommunikationsserver 116 leitet die Prüfantwort mit dem entschlüsselten Antwortschlüssel in einer Ausgestaltung an die Applikation 102 des Endgeräts 101 weiter. Um eine Manipulation der Angabe des Prüfungsergebnisses innerhalb der auf dem Transportweg zwischen dem Kommunikationsserver 116 und dem Endgerät 101 zu verhindern, kann die Antwortnachricht 209 optional mittels des zwischen dem Kommunikationsserver 116 und der Applikation 102 etablierten Kryptosystems geschützt werden. Die hierfür durchgeführte optionale Verschlüsselung der Prüfantwort ist in der Figur 2 anhand der Angabe des Schlüssels S1 in Verbindung veranschaulicht.

Die Applikation 102 liest aus der erhaltenen Meldung des Kommunikationsservers den Antwortschlüssel aus und vergleicht diesen mit dem zuvor zur Erzeugung der Prüfanfrage verwendeten Antwortschlüssel, der für den Vergleich in der Applikation 102 zumindest temporär gespeichert wird. Wenn der erhaltene Antwortschlüssel mit dem gespeicherten Antwortschlüssel übereinstimmt, dann stellt die Applikation den erfolgreichen Abschluss der Nutzerauthentifizierung fest. Aufgrund dieser Feststellung können, wie zuvor beschrieben, etwa geschützte Funktionen für den Zugriff durch den Nutzer des Kommunikationsendgeräts 101 freigegeben werden.

Sofern die Prüfanfrage nicht von der Applikation 102 sondern von dem Kommunikationsserver 116 erzeugt wird, erfolgt auch die Prüfung des in der Prüfantwort 210 des Identifizierungsmoduls 111 enthaltenen Antwortschlüssels in dem Kommunikationsserver 116. Die Prüfung erfolgt in gleicher Weise wie zuvor beschrieben, indem der Kommunikationsserver 116 den in der Antwortmitteilung 210 enthaltenen Antwortschlüssel mit dem zur Erzeugung der Prüfanfrage verwendeten und in dem Kommunikationsserver 116 gespeicherten Antwortschlüssel vergleicht. Bei erfolgreicher Prüfung, d.h. bei Übereinstimmung beider Antwortschlüssel, wird die erfolgreiche Beantwortung der Prüfanfrage durch das Identifizierungsmodul 111 innerhalb der Antwortnachricht 209 von dem Kommunikationsserver 116 an die Applikation 102 gemeldet. Eine Manipulation dieser Meldung kann durch die zuvor beschriebene Verschlüsselung der Antwortnachricht erreicht werden.

Der in dem Identifizierungsmodul 111 entschlüsselte Antwortschlüssel kann in der Prüfantwort grundsätzlich unverschlüsselt an den Kommunikationsserver 116 gesendet und ggf. unverschlüsselt von dem Kommunikationsserver 116 an die Applikation 102 weitergeleitet werden. Da Identifizierungsmodule 111 ihre OTA-Schlüssel zur Erhöhung der Sicherheit in der Regel nicht zur Verschlüsselung abgehender Nachrichten verwenden können, wäre zur Verschlüsselung der von dem Identifizierungsmodul 111 gesendeten Antwortmitteilung 210 die Einrichtung eines weiteren Kryptosystems erforderlich. Hierauf kann bei einem Verzicht auf die Verschlüsselung des Antwortschlüssels bzw. der Antwortnachricht 210 verzichtet werden. Um dabei Manipulationen mithilfe ausgelesener Schlüssel zu verhindern, wird jeder Antwortschlüssel vorzugsweise nur einmal, d. h. für einen Authentifizierungsvorgang verwendet. Es handelt sich somit um sogenannte Sitzungsschlüssel. Hierdurch wird verhindert, dass ein Antwortschlüssel der von einem Angreifer aus einer Antwortmitteilung 210 des Identifizierungsmoduls 111 ausgelesen worden ist, in missbräuchlicher Absicht als gültiger Antwortschlüssel in eine weitere Antwortmitteilung 210 eingebracht werden kann.

Ergänzend kann vorgesehen sein, dass dem Antwortschlüssel eine Gültigkeitsdauer zugeordnet wird. Die Gültigkeitsdauer ist einerseits so bemessen, dass ausreichend Zeit für die Übermittlung der OTA-Nachricht 203 an das Identifizierungsmodul 111, die Entschlüsselung des in der Prüfanfrage enthaltenen Antwortschlüssels und die Übermittlung der Antwortmitteilung 210 an den Kommunikationsserver 116 sowie ggf. der Antwortnachricht 209 an die Applikation 102 zur Verfügung steht. Andererseits wird die Gültigkeitsdauer nicht zu lange gewählt. Wenn in der Applikation 102 oder in dem Kommunikationsserver 102 der Antwortschlüssel zur Prüfung empfangen wird, dann prüft die Applikation 102 oder der Kommunikationsserver 116, ob die Gültigkeitsdauer des enthaltenen Antwortschlüssels abgelaufen ist oder nicht. Hierzu erstellt der die Applikation 102 oder der Kommunikationsserver 116 in einer Ausführungsform bei Erzeugung der Prüfanfrage einen Zeitstempel, der in Zuordnung zu dem darin enthaltenen Antwortschlüssel gespeichert wird. Bei der Prüfung des Antwortschlüssels wird Zeit des Empfangs des Antwortschlüssels mit dem Zeitstempel verglichen, um zu prüfen, ob der Antwortschlüssel innerhalb der Gültigkeitsdauer empfangen worden ist. Ist dies der Fall, wird der Antwortschlüssel weiter geprüft. Wird hingegen festgestellt, dass die Gültigkeitsdauer abgelaufen ist, wird der Antwortschlüssel als ungültig erkannt und eine Fehlerroutine gestartet.

In der zuvor beschriebenen Ausgestaltung wird die Prüfanfrage von dem Identifizierungsmodul ohne weitere Interaktion zwischen dem Identifizierungsmodul 111 und dem Nutzer des Kommunikationsendgeräts 101 beantwortet. Die Beantwortung der Prüfanfrage wird dabei vorgenommen, nachdem die Funktionen des Identifizierungsmoduls 111 von dem Nutzer durch die zuvor bereits beschriebene Eingabe seines Authentisierungsmerkmals und die erfolgreiche Prüfung des Authentisierungsmerkmals freigeschaltet worden sind. Somit besteht eine hohe Sicherheit, dass die Applikation 102 von dem berechtigten Nutzer 102 verwendet wird.

In der zuvor beschriebenen Ausgestaltung erfolgt die Nutzerauthentifizierung dadurch, dass anhand der Prüfanfrage festgestellt wird, ob das dem Nutzer zugeordneten Identifikationsmodul 111 in dem Kommunikationsendgerät 101 vorhanden ist. In einer weiteren Ausgestaltung nimmt das Identifizierungsmodul 111 aufgrund des Empfangs der Prüfanfrage eine weitere Nutzerauthentifizierung vor. Aufgrund des Empfangs der Prüfanfrage wird der Nutzer in dieser Ausgestaltung von dem Identifizierungsmodul 111 dazu aufgefordert, ein Authentisierungsmerkmal an der Benutzerschnittstelle 106 des einzugeben. Dieses Authentisierungsmerkmal wird von dem Identifizierungsmodul 111 geprüft und erst nach erfolgreicher Prüfung des Authentisierungsmerkmals wird die Entschlüsselung des in der Prüfanfrage enthaltenen verschlüsselten Antwortschlüssels vorgenommen. Sofern die Prüfung des Authentisierungsmerkmals nicht erfolgreich durchgeführt werden kann, kann das Identifizierungsmodul 11 eine Fehlermeldung erzeugen und an den Kommunikationsserver 116 senden. Das Authentisierungsmerkmal zur Freischaltung der Beantwortung der Prüfanfrage kann dem oben bereits beschriebenen Authentisierungsmerkmal zur Freischaltung des Identifizierungsmoduls 111 entsprechen. Zur Freischaltung der Beantwortung der Prüfanfrage kann jedoch auch ein weiteres Authentisierungsmerkmal vorgesehen sein, bei dem es sich beispielsweise um eine weitere PIN handeln kann.

Insbesondere dann, wenn das Identifizierungsmodul 111 die Beantwortung der Prüfanfrage nur nach einer zusätzlichen Nutzerauthentifizierung durchführt, kann vorgesehen sein, dass die Prüfanfrage jeweils einen Antwortschlüssel für die möglichen Ergebnisse der Nutzerauthentifizierung durch das Identifizierungsmodul 111 enthält. Insbesondere kann ein Antwortschlüssel enthalten sein, der einer erfolgreichen Nutzerauthentifizierung zugeordnet ist sowie ein weiterer Antwortschlüssel, welcher einer fehlgeschlagenen Nutzerauthentifizierung zugeordnet ist. Wie in der zuvor beschriebenen Ausgestaltung mit einem in der Prüfanfrage enthaltenen Antwortschlüssel werden die Antwortschlüssel bei der Generierung der verschlüsselt und nach Übermittlung der Prüfanfrage an das Identifizierungsmodul 111 in dem Identifizierungsmodul 111 entschlüsselt.

In einer Ausgestaltung sind die Antwortschlüssel als alphanummerische Zeichenketten ausgeführt, die eine hinreichende Länge aufweisen, welche Manipulationen mit ausrechender Wahrscheinlichkeit ausschließt. Um eine nachvollziehbare Relation zwischen den beiden Antwortschlüsseln für die möglichen Prüfungsergebnisse auszuschließen, können die Zeichenketten zufällig oder mittels eines Pseudo-Zufallsalgorithmus' in den Kommunikationsserver 116 generiert werden

Nachdem das Identifizierungsmodul 111 die Antwortschlüssel aus der OTA-Nachricht 203 ausgelesen hat und die Nutzerauthentifizierung anhand des Authentisierungsmerkmals durchgeführt hat, wählt das Identifizierungsmodul 111 den Antwortschlüssel, welcher dem Ergebnis der Authentifizierung entspricht und fügt den ausgewählten Antwortschlüssel in die Prüfantwort 210 ein, welche sodann in der zuvor bereits beschriebenen Weise in den Schritten 207 und 208 an den Kommunikationsserver 116 übermittelt wird. Dieser leitet die Prüfantwort ggf. an die Applikation 102 weiter.

Wenn die Einheit, welche die Prüfanfrage erzeugt hat (die Applikation 102 oder der Kommunikationsserver 116) eine Prüfantwort 210 mit einem Antwortschlüssel erhält, liest sie den Antwortschlüssel aus der Antwortmitteilung 210 aus und ermittelt das Authentifizierungsergebnis, das dem Antwortschlüssel zugeordnet ist. Hierzu werden die Antwortschlüssel und Informationen über die zugeordneten Authentifizierungsergebnisse nach der Erzeugung der Antwortschlüssel in der betreffenden Einheit hinterlegt. Sofern es sich bei der Einheit um den Kommunikationsserver 116 handelt, meldet dieser das Authentifizierungsergebnis an die Applikation 102.

Nachdem die Applikation 102 das Authentifizierungsergebnis ermittelt hat oder die Meldung des Authentifizierungsergebnisses von dem Kommunikationsserver 116 erhalten hat, kann die Applikation den Zugriff auf ihre geschützten Funktionen in Abhängigkeit von dem Authentifizierungsergebnis freigeben.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichen

- 101: Kommunikationsendgerät
- 102: Applikation
- 103: Terminal
- 104: Prozessoreinheit
- 105: Speichereinheit
- 106: Benutzerschnittstelle
- 107: Mobilfunknetz
- 108: Funkmodul
- 109: Kommunikationspartner
- 110: Netzknoten
- 111: Identifizierungsmodul
- 112: OTA-Server
- 113: Datenbank des OTA-Servers
- 114: SMSC (Short Message Service Center)
- 115: Übermittlungseinrichtung
- 116: Kommunikationsserver
- 201, 204-209, 211: Schritte
- 202: Anforderungsnachricht
- 203: OTA-Nachricht
- 210: Prüfantwort

## Patentansprüche

1. Verfahren zum Übermitteln einer Prüfanfrage zur Freigabe eines Zugriffs auf eine Applikation eines Kommunikationsendgerätes (101) an ein in dem Kommunikationsendgerät (101) enthaltenes Identifizierungsmodul (111) mit den folgenden Schritten:
- Erzeugen eines Antwortschlüssels,
- Empfangen einer von der Applikation (102) des Kommunikationsendgeräts (101) gesendeten Anforderung zur Übermittlung der Prüfanfrage an das Identifizierungsmodul (111) in einer räumlich getrennt von dem Kommunikationsendgerät (101) angeordneten Übermittlungseinrichtung (115),
- Übertragen der Prüfanfrage von der Übermittlungseinrichtung (115) an das Identifizierungsmodul (111) des Kommunikationsendgeräts (101) aufgrund der Anforderung, wobei die Prüfanfrage den Antwortschlüssel umfasst,
- Ermitteln einer Prüfantwort (210) mittels des Identifizierungsmoduls (111) basierend auf der Prüfanfrage, wobei die Prüfantwort (210) den Antwortschlüssel enthält,
- Empfangen der Prüfantwort (210) auf die Prüfanfrage in der Übermittlungseinrichtung (115),
- Prüfen der Prüfantwort (210) mittels des Antwortschlüssels, und
- Übermitteln einer Benachrichtigung über die erhaltene Prüfantwort (210) von der Übermittlungseinrichtung (115) an die Applikation (102) des Kommunikationsendgeräts (101).

2. Verfahren nach Anspruch 1, wobei das Verfahren den weiteren Schritt umfasst:
- Verschlüsseln des von der Prüfanfrage umfassten Antwortschlüssels, so dass der verschlüsselte Antwortschlüssel mit einem in dem Identifizierungsmodul (111) gespeicherten geheimen kryptografischen Schlüssel entschlüsselbar ist.

3. Verfahren nach Anspruch 2, wobei die Prüfantwort (210) den in dem Identifizierungsmodul (111) mittels des kryptografischen Schlüssels entschlüsselten Antwortschlüssel enthält.

4. Verfahren nach einem der vorangegangen Ansprüche, wobei das Identifizierungsmodul (111) die Prüfantwort (210) erzeugt und/oder den Antwortschlüssel entschlüsselt, nachdem das Identifizierungsmodul eine Nutzerauthentifizierung erfolgreich durchgeführt hat.

5. Verfahren nach Anspruch 4, wobei die Nutzerauthentifizierung eine Prüfung eines von dem Nutzer an dem Kommunikationsendgerät (101) eingegebenen Authentisierungsmerkmals, insbesondere einer persönlichen Identifikationsnummer, umfasst.

6. Verfahren nach einem der vorangegangenen Ansprüche, wobei die Applikation (102) die Anforderung zur Übermittlung der Prüfanfrage an das Identifizierungsmodul (111) aufgrund eines Zugriffsversuchs eines Nutzers des Kommunikationsendgeräts (101) auf eine geschützte Funktion der Applikation (102) an die Übermittlungseinrichtung (115) sendet.

7. Verfahren nach Anspruch, wobei die Applikation einen Zugriff auf die geschützte Funktion in Abhängigkeit von der Benachrichtigung über die erhaltene Prüfantwort (210) freigibt.

8. Verfahren nach einem der vorangegangenen Ansprüche, wobei die Applikation (102) den Aufbau einer gesicherten Kommunikationsverbindung, insbesondere eines Sprach- und/oder Videoanrufs, mit einem Kommunikationspartner ermöglicht, wobei der Aufbau der Kommunikationsverbindung in Abhängigkeit von der Benachrichtigung über die erhaltene Prüfantwort (210) freigegeben wird.

9. Verfahren nach einem der vorangegangenen Ansprüche, wobei der in der Prüfanfrage enthaltene verschlüsselte Antwortschlüssel von der Applikation (102) erzeugt wird.

10. Verfahren nach Anspruch 9, wobei die Übermittlungseinrichtung (115) den in der Prüfantwort (210) erhaltenen Antwortschlüssel an die Applikation (102) weiterleitet.

11. Verfahren nach einem der vorangegangenen Ansprüche, wobei das Kommunikationsendgerät (101) und/oder das Identifizierungsmodul (111) über ein Kommunikationsnetz, insbesondere ein Mobilfunknetz (107), mit der Übermittlungseinrichtung (115) verbunden sind.

12. Vorrichtung zur Verbindung mit einem räumlich von der Vorrichtung getrennten Kommunikationsendgerät (101), das ein Identifizierungsmodul (111) enthält, welches zur Beantwortung einer Prüfanfrage zur Freigabe eines Zugriffs auf eine Applikation eines Kommunikationsendgerätes (101) ausgestaltet ist, wobei die Vorrichtung dazu ausgestaltet ist:
- eine von der Applikation (102) des Kommunikationsendgeräts (101) gesendete Anforderung zur Übermittlung der Prüfanfrage an das Identifizierungsmodul (111) des Kommunikationsendgeräts (101) zu empfangen;
- die Prüfanfrage zu erzeugen, wobei die Prüfanfrage einen Antwortschlüssel umfasst;
- die Prüfanfrage aufgrund der Anforderung an das Identifizierungsmodul (111) zu übermitteln;
- eine in dem Identifizierungsmodul (111) ermittelte Prüfantwort (210) auf die Prüfanfrage zu empfangen, wobei die Prüfantwort (210) den Antwortschlüssel umfasst;
- die Prüfantwort (210) mittels des Antwortschlüssels zu prüfen; und
- eine Benachrichtigung über die erfolgreiche Prüfung der erhaltenen Prüfantwort (210) an die Applikation (102) des Kommunikationsendgeräts (101) zu übermitteln.

13. Applikation zur Verwendung in einem Kommunikationsendgerät (101), das ein Identifizierungsmodul (111) enthält, wobei die Applikation (102) dazu ausgestaltet ist, eine Prüfanfrage zur Freigabe eines Zugriffs auf die Applikation zu erzeugen, die einen Antwortschlüssel umfasst und mittels des Kommunikationsendgerätes (101), die Prüfanfrage an das Identifizierungsmodul (111) an eine räumlich von dem Kommunikationsendgerät (101) getrennte Übermittlungseinrichtung (115) zu übermitteln, und die Applikation dazu ausgestaltet ist, eine Prüfantwort (210) mittels des Kommunikationsendgerätes (101) zu empfangen, wobei die Prüfantwort (210) den Antwortschlüssel umfasst, die Applikation (102) weiter dazu ausgestaltet ist, die Prüfantwort (210) mittels des Antwortschlüssels zu prüfen.

14. Kommunikationsendgerät (101), umfassend ein Identifizierungsmodul (111) und eine Applikation (102), wobei die Applikation (102) dazu ausgestaltet ist, eine Prüfanfrage zu erzeugen, die einen Antwortschlüssel umfasst, das Kommunikationsendgerät (101) dazu ausgestaltet ist, die Prüfanfrage an das Identifizierungsmodul (111) an eine räumlich von dem Kommunikationsendgerät (101) getrennte Übermittlungseinrichtung (115) zu übermitteln, das Kommunikationsendgerät (101) dazu ausgestaltet ist, die Prüfanfrage von der Übermittlungseinrichtung (115) zu empfangen und an das Identifizierungsmodul (111) zu übermitteln, das Identifizierungsmodul (111) ausgestaltet ist, eine Prüfantwort (210) auf die Prüfanfrage zu ermitteln, wobei die Prüfantwort (210) den Antwortschlüssel umfasst, das Kommunikationsendgerät (101) dazu ausgestaltet ist, die Prüfantwort (210) an die Übermittlungseinrichtung (115) zu übermitteln, das Kommunikationsendgerät (101) weiter dazu ausgestaltet ist, die Prüfantwort (210) von der Übermittlungseinrichtung (115) zu empfangen und an die Applikation (102) zu übermitteln, die Applikation (102) ausgestaltet ist, die Prüfantwort (210) mittels des Antwortschlüssels zu prüfen.

15. System umfassend eine Vorrichtung nach Anspruch 12 und ein Kommunikationsendgerät (101) umfassend ein Identifizierungsmodul (111) und eine Applikation (102), wobei die Applikation (102) dazu ausgestaltet ist, eine Anforderung zur Übermittlung einer Prüfanfrage zur Freigabe eines Zugriffs auf die Applikation an das Identifizierungsmodul (111) an die Vorrichtung zu übermitteln und eine Benachrichtigung über die Prüfantwort (210) des Identifizierungsmodul von der Vorrichtung zu empfangen.

16. System umfassend eine Übermittlungseinrichtung (115) und ein Kommunikationsendgerät (101) nach Anspruch 14, wobei die Übermittlungseinrichtung (115) dazu ausgestaltet ist:
- eine von einer Applikation (102) des Kommunikationsendgeräts (101) gesendete Prüfanfrage zur Freigabe eines Zugriffs auf die Applikation an das Identifizierungsmodul (111) des Kommunikationsendgeräts (101) zu empfangen;
- die Prüfanfrage aufgrund der Anforderung an das Identifizierungsmodul (111) zu übermitteln;
- eine in dem Identifizierungsmodul (111) ermittelte Prüfantwort (210) auf die Prüfanfrage zu empfangen; und
- eine Benachrichtigung über die erhaltene Prüfantwort (210) an die Applikation (102) des Kommunikationsendgeräts (101) zu übermitteln.

## Claims

1. A method for transmitting a verification request for enabling access to an application of a communication terminal device (101) to an identification module (111) contained in the communication terminal device (101), comprising the following steps:
- a response key is generated,
- a request that was sent by the application (102) of the communication terminal device (101) instructing that the verification request should be transmitted to the identification module (111) is received in a transmission means (115) that is arranged physically separate from the communication terminal device (101),
- the verification request is transmitted by the transmission means (115) to the identification module (111) of the communication terminal device (101) in response to the request, whereby the verification request comprises the response key,
- a verification response (210) is determined by means of the identification module (111) on the basis of the verification request, whereby the verification response (210) contains the response key,
- the verification response (210) to the verification request is received in the transmission means (115),
- the verification response (210) is verified by means of the response key, and
- a notification about the received verification response (210) is transmitted by the transmission means (115) to the application (102) of the communication terminal device (101).

2. The method according to claim 1, wherein the method comprises the additional step:
- the response key contained in the verification request is encrypted, so that the encrypted response key can be decrypted with a secret cryptographic key that is stored in the identification module (111).

3. The method according to claim 2, wherein the verification response (210) contains the response key that is decrypted in the identification module (111) by means of the cryptographic key.

4. The method according to one of the preceding claims, wherein the identification module (111) generates the verification response (210) and/or decrypts the response key after the identification module has successfully performed a user authentication.

5. The method according to claim 4, wherein the user authentication comprises the verification of an authentication feature, especially a personal identification number, entered into the communication terminal device (101) by the user.

6. The method according to one of the preceding claims, wherein, in response to an attempt by a user of the communication terminal device (101) to access a protected function of the application (102), the application (102) sends to the transmission means (115) the request for the transmission of the verification request to the identification module (111).

7. The method according to anyone of the preceding claims, wherein the application enables access to the protected function depending on the notification about the received verification response (210).

8. The method according to one of the preceding claims, wherein the application (102) allows the establishment of a secure communication connection, especially of a voice and/or video call, to a communication partner, whereby the establishment of the communication connection is enabled depending on the notification about the received verification response (210).

9. The method according to one of the preceding claims, wherein the encrypted response key contained in the verification request is generated by the application (102).

10. The method according to claim 9, wherein the response key contained in the verification response (210) is forwarded to the application (102) by the transmission means (115).

11. The method according to one of the preceding claims, wherein the communication terminal device (101) and/or the identification module (111) are connected to the transmission means (115) via a communication network, especially via a cellular network (107).

12. A device for connection to a communication terminal device (101) that is physically separate from it, wherein the communication terminal device (101) comprises an identification module (111) which is configured to respond to a verification request for enabling access to an application of the communication terminal device (101), whereby the device is configured:
- to receive a request sent by an application (102) of the communication terminal device (101) instructing that the verification request should be transmitted to the identification module (111) of the communication terminal device (101),
- to generate the verification request, whereby the verification request comprises a response key,
- to transmit the verification request to the identification module (111) in response to the request,
- to receive a verification response (210) to the verification request determined in the identification module (111), whereby the verification response (210) comprises the response key,
- to verify the verification response (210) by means of the response key, and
- to transmit a notification about the successful verification of the received verification response (210) to the application (102) of the communication terminal device (101).

13. An application for use in a communication terminal device (101) containing an identification module (111), wherein the application (102) is configured to generate a verification request for enabling access to an application that comprises a response key and, by means of the communication terminal device (101), to transmit the verification request made to the identification module (111) to a transmission means (115) that is arranged physically separate from the communication terminal device (101), and the application is configured to receive a verification response (210) by means of the communication terminal device (101), whereby the verification response (210) comprises the response key, and moreover, the application (102) is configured to verify the verification response (210) by means of the response key.

14. A communication terminal device (101), comprising an identification module (111) and an application (102), whereby the application (102) is configured to generate a verification request comprising a response key, the communication terminal device (101) is configured to transmit the verification request made to the identification module (111) to a transmission means (115) that is arranged physically separate from the communication terminal device (101), the communication terminal device (101) is configured to receive the verification request from the transmission means (115) and to transmit it to the identification module (111), the identification module (111) is configured to determine a verification response (210) to the verification request, whereby the verification response (210) comprises the response key, the communication terminal device (101) is configured to transmit the verification response (210) to the transmission means (115), the communication terminal device (101) is also configured to receive the verification response (210) from the transmission means (115) and to transmit it to the application (102), and the application (102) is configured to verify the verification response (210) by means of the response key.

15. A system comprising a device according to claim 12 and a communication terminal device (101) comprising an identification module (111) and an application (102), whereby the application (102) is configured to transmit to the identification module (111) of the device a verification request for enabling access to the application, and to receive from the device a notification about the verification response (210) of the identification module.

16. System comprising a transmission means (115) and a communication terminal device (101) according to claim 14, wherein the transmission means (115) is configured:
- to receive a verification request sent to the identification module (111) of the communication terminal device (101) by an application (102) of the communication terminal device (101) for enabling access to the application,
- to transmit the verification request on the basis of the request sent to the identification module (111),
- to receive a verification response (210) to the verification request determined in the identification module (111), and
- to transmit a notification about the received verification response (210) to the application (102) of the communication terminal device (101).

## Revendications

1. Procédé de transmission d'une demande de contrôle, en vue de l'autorisation d'un accès à une application d'un terminal de communication (101), à un module d'identification (111) contenu dans le terminal de communication (101), comportant les étapes suivantes :
- génération d'une clé de réponse ;
- réception d'une requête, émise par l'application (102) du terminal de communication (101), en vue de la transmission de la demande de contrôle au module d'identification (111) dans un dispositif de transmission (115) agencé séparément du terminal de communication (101) dans l'espace ;
- transfert de la demande de contrôle du dispositif de transmission (115) au module d'identification (111) du terminal de communication (101) en raison de la requête, la demande de contrôle comprenant la clé de réponse ;
- détermination d'une réponse de contrôle (210) au moyen du module d'identification (111) sur la base de la demande de contrôle, la réponse de contrôle (210) contenant la clé de réponse ;
- réception de la réponse de contrôle (210) à la demande de contrôle in der dispositif de transmission (115),
- contrôle de la réponse de contrôle (210) au moyen de la clé de réponse et
- transmission d'une notification relative à la réponse de contrôle reçue (210) par le dispositif de transmission (115) à l'application (102) du terminal de communication (101).

2. Procédé selon la revendication 1, le procédé comprenant l'étape suivante :
cryptage de la clé de réponse incluse dans la demande de contrôle, de sorte que la clé de réponse cryptée peut être décryptée au moyen d'une clé cryptographique secrète stockée dans le module d'identification (111).

3. Procédé selon la revendication 2, la réponse de contrôle (210) contenant la clé de réponse décryptée dans le module d'identification (111) au moyen de la clé cryptographique.

4. Procédé selon l'une des revendications précédentes, le module d'identification (111) générant la réponse de contrôle (210) et/ou décryptant la clé de réponse après que le module d'identification a effectué avec succès une authentification d'utilisateur.

5. Procédé selon la revendication 4, l'authentification d'utilisateur incluant un contrôle d'une caractéristique d'authentification introduite par l'utilisateur au niveau du terminal de communication (101), et plus particulièrement un numéro d'identification personnel.

6. Procédé selon l'une des revendications précédentes, l'application (102) envoyant au dispositif de transmission (115) la requête de transmission de la demande de contrôle au module d'identification (111) sur la base d'une tentative d'accès d'un utilisateur du terminal de communication (101) à une fonction protégée de l'application (102).

7. Procédé selon l'une des revendications précédentes, l'application autorisant un accès à la fonction protégée en fonction de la notification relative à la réponse de contrôle reçue (210).

8. Procédé selon l'une des revendications précédentes, l'application (102) permettant l'établissement d'une liaison de communication sécurisée, en particulier d'un appel vocal et/ou vidéo, avec un partenaire de communication, l'établissement de la liaison de communication étant autorisé en fonction de la notification relative à la réponse de contrôle reçue (210).

9. Procédé selon l'une des revendications précédentes, la clé de contrôle cryptée contenue dans la demande de contrôle étant générée par l'application (102).

10. Procédé selon la revendication 9, le dispositif de transmission (115) retransmettant à l'application (102) la clé de réponse reçue dans la réponse de contrôle (210).

11. Procédé selon l'une des revendications précédentes, le terminal de communication (101) et/ou le module d'identification (111) étant reliés au dispositif de transmission (115) via un réseau de communication, et plus particulièrement un réseau radio mobile (107).

12. Dispositif pour établir une liaison avec un terminal de communication (101) séparé spatialement du dispositif et contenant un module d'identification (111), lequel est conçu pour répondre à une demande de contrôle en vue de l'autorisation d'un accès à une application d'un terminal de communication (101), le dispositif étant conçu pour :
- recevoir une requête, émise par l'application (102) du terminal de communication (101), en vue de la transmission de la demande de contrôle au module d'identification (111) du terminal de communication (101);
- générer la demande de contrôle, la demande de contrôle comprenant une clé de réponse ;
- transmettre la demande de contrôle sur la base de la requête au module d'identification (111) ;
- recevoir une réponse de contrôle (210), déterminée dans le module d'identification (111), à la demande de contrôle, la réponse de contrôle (210) comprenant la clé de réponse ;
- contrôler la réponse de contrôle (210) au moyen de la clé de réponse et
- transmettre une notification relative au contrôle réussi de la réponse de contrôle reçue (210) à l'application (102) du terminal de communication (101).

13. Application destinée à être utilisée dans un terminal de communication (101) qui contient un module d'identification (111), l'application (102) étant conçue pour générer une demande de contrôle en vue de l'autorisation d'un accès à l'application qui comprend une clé de réponse et pour transmettre, au moyen du terminal de communication (101), la demande de contrôle adressée au module d'identification (111) à un dispositif de transmission (115) séparé spatialement du terminal de communication (101), et l'application étant conçue pour recevoir une réponse de contrôle (210) au moyen du terminal de communication (101), la réponse de contrôle (210) comprenant la clé de réponse, l'application (102) étant en outre conçue pour contrôler la réponse de contrôle (210) au moyen de la clé de réponse.

14. Terminal de communication (101), comprenant un module d'identification (111) et une application (102), l'application (102) étant conçue pour générer une demande de contrôle qui comprend une clé de réponse, le terminal de communication (101) étant conçu pour transmettre la demande de contrôle adressée au module d'identification (111) à un dispositif de transmission (115) séparé spatialement du terminal de communication (101), le terminal de communication (101) étant conçu pour recevoir la demande de contrôle du dispositif de transmission (115) et la transmettre au module d'identification (111), le module d'identification (111) étant conçu pour déterminer une réponse de contrôle (210) à la demande de contrôle, la réponse de contrôle (210) comprenant la clé de réponse, le terminal de communication (101) étant conçu pour transmettre la réponse de contrôle (210) au dispositif de transmission (115), le terminal de communication (101) étant en outre conçu pour recevoir la réponse de contrôle (210) du dispositif de transmission (115) et la transmettre à l'application (102), l'application (102) étant conçue pour contrôler la réponse de contrôle (210) au moyen de la clé de réponse.

15. Système comprenant un dispositif selon la revendication 12 et un terminal de communication (101) comprenant un module d'identification (111) et une application (102), l'application (102) étant conçue pour transmettre au dispositif une requête de transmission d'une demande de contrôle au module d'identification (111) en vue de l'autorisation d'un accès à l'application et pour recevoir du dispositif une notification relative à la réponse de contrôle (210) du module d'identification.

16. Système comprenant un dispositif de transmission (115) et un terminal de communication (101) selon la revendication 14, le dispositif de transmission (115) étant conçu pour :
- recevoir une demande de contrôle en vue de l'autorisation d'un accès à l'application, émise par une application (102) du terminal de communication (101) et adressée au module d'identification (111) du terminal de communication (101) ;
- transmettre la demande de contrôle sur la base de la requête au module d'identification (111) ;
- recevoir une réponse de contrôle (210) à la demande de contrôle déterminée dans le module d'identification (111) et
- transmettre une notification relative à la réponse de contrôle reçue (210) à l'application (102) du terminal de communication (101).
